# EUROPÄISCHE PATENTSCHRIFT

(11) **EP 2 282 861 B1**
(45) Veröffentlichungstag und Bekanntmachung des Hinweises auf die Patenterteilung: **22.02.2012**
(21) Anmeldenummer: 09777187.7
(22) Anmeldetag: 14.07.2009
(51) Int. Cl.: B23C 3/00

(54) **VERFAHREN ZUR HERSTELLUNG EINES FERTIGTEILS AUS EINEM ROHTEIL MITTELS EINES FRÄSWERKZEUGES**
METHOD FOR PRODUCING A PREFABRICATED PART FROM AN UNMACHINED PART BY MEANS OF A MILLING TOOL
PROCÉDÉ DE PRODUCTION D'UNE PIÈCE FINIE À PARTIR D'UNE PIÈCE BRUTE AU MOYEN D'UN OUTIL DE FRAISAGE

(30) Priorität: 15.07.2008 DE 102008033130
(43) Veröffentlichungstag der Anmeldung: 16.02.2011
(73) Patentinhaber: OPEN MIND Technologies AG, 82234 Wessling (DE)
(72) Erfinder: BRAMBS, Peter, 80803 München (DE); JUNG, Eike, 01705 Freital (DE); KOCH, Josef, 81371 München (DE)
(74) Vertreter: Grape & Schwarzensteiner
(86) Internationale Anmeldenummer: PCT/EP2009/005118
(87) Internationale Veröffentlichungsnummer: WO 2010/006768

(56) Entgegenhaltungen:
- EP-A- 1 034 865
- EP-A- 1 356 886
- US-A- 3 811 163

## Beschreibung

Die Erfindung betrifft ein Verfahren zur Herstellung eines Fertigteils aus einem Rohteil mittels eines Fräswerkzeuges.

Eine besondere Bewegungsführung des Fräswerkzeuges ist in der Regel dann beim Eintauchen des Fräsers in zu bearbeitendes Material von besonderer Bedeutung, wenn das Fräswerkzeug mit überwiegend stirnseitigem Kontakt axial große Zustelltiefen erreichen muss. Bei Fräsbearbeitungen mit großen Zustelltiefen in das Material - wie zum Beispiel beim Schruppen - haben in der Praxis verschiedene Verfahren Verwendung gefunden. Oft wird das Material am Startpunkt in einer separaten Operation - in der Regel mittels Bohren - vorher so entfernt, dass der Startpunkt der Bearbeitung ohne Materialabtrag axial erreicht werden kann.

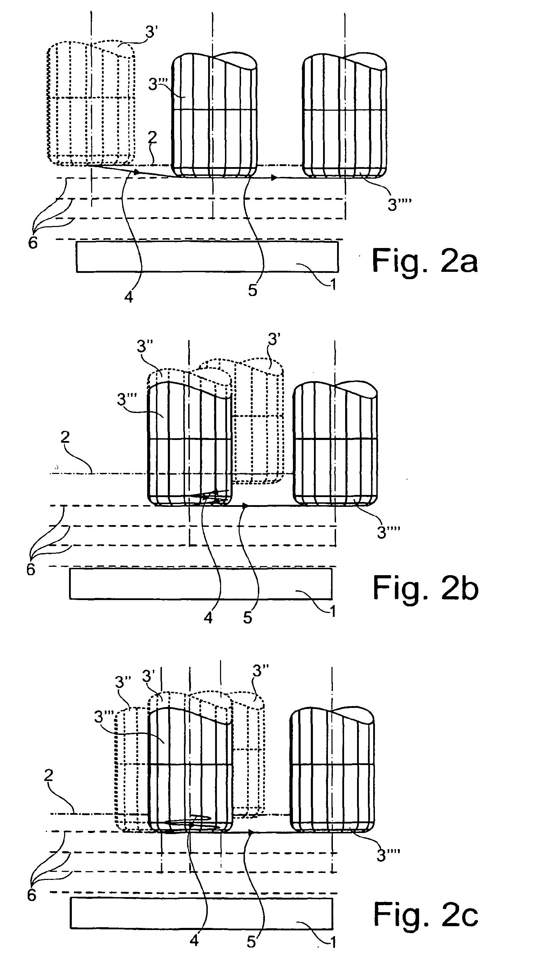

Ist die Vorgabe definierter Eintauchpunkte oder deren Vorbearbeitung nicht möglich, so wird ausgehend von der Kontur des Rohteils zum Startpunkt hin ein zusätzlicher rampenförmiger oder helikaler Fräswerkzeugweg berechnet, über den sich das Fräswerkzeug unter einem flachen Winkel der folgenden Bearbeitungsschicht oder der Tangentialebene an den ersten Bahnpunkt kontinuierlich annähert. Entsprechende Beispiele einer Bearbeitung mit fest angestellter Fräswerkzeugachse sind in den Fig. 2a bis 2c dargestellt. Damit vergleichbar wird beispielhaft auf das Bearbeitungsverfahren und die Bearbeitungsvorrichtung, die aus der DE 199 03 216 A1 bekannt ist, verwiesen. Eine Veränderung der Werkzeugorientierung während der Zustellbewegung findet nicht statt.

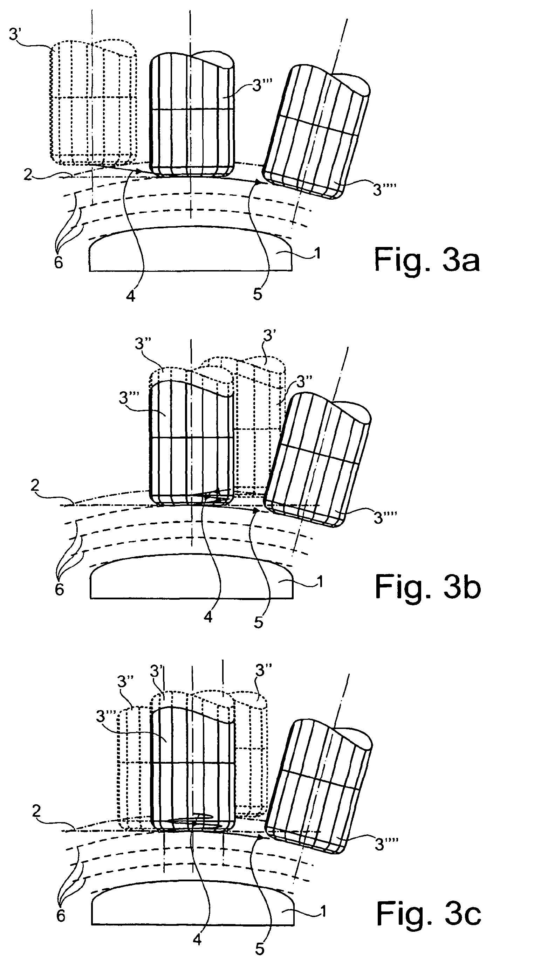

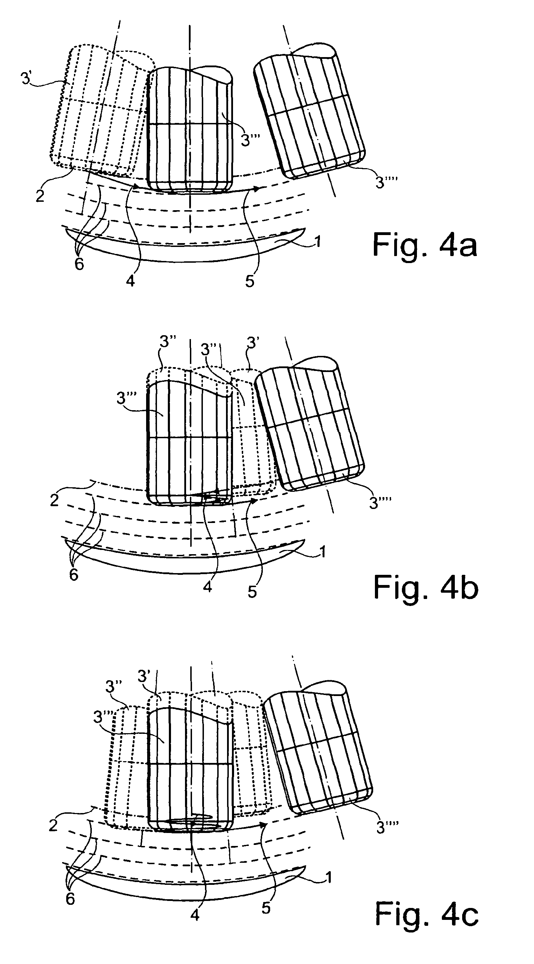

Bei mehrachsigen Bearbeitungen, d.h. bei Bearbeitungen mit veränderlicher Orientierung der Werkzeugachse, folgt die Werkzeugorientierung während des Eintauchweges der Werkzeugorientierung am ersten Bahnpunkt, welche über den gesamten Eintauchweg unverändert bleibt, wie aus den Fig. 3a bis 3c ersichtlich ist, oder folgt die Werkzeugorientierung der globalen Führungsinformation der folgenden Bearbeitungsschicht, wie aus der Fig. 4a bis 4c hervorgeht.

Die Tauchfähigkeit eines Fräswerkzeuges wird neben Anordnung und Form (Schliff, Höhe) der stirnseitigen Schneiden insbesondere von der Fähigkeit des Ableitens der vor der Fräswerkzeugstirn entstehenden Späne bestimmt. Eine gute Tauchfähigkeit ist daher mit einer Schwächung des Querschnittes verbunden, was die Fähigkeit zur Aufnahme seitlicher Kräfte und somit auch das erreichbare Zeitspanvolumen reduziert. Hochleistungsfräswerkzeuge sind daher in der Regel in Ihrer Tauchfähigkeit auf sehr flache Eintauchwinkel begrenzt, was die zusätzlichen Wege zum Erreichen der Bearbeitungstiefe und somit die Bearbeitungszeit verlängert. Insbesondere bei kleinen Taschen und nicht über Mitte schneidendem Fräswerkzeug sind die Eintauchwege oft nicht in der erforderlichen Länge ausführbar. Außerdem kann in verschiedenen Werkstoffen selbst das Eintauchen unter einem sehr flachen Winkel zu einem erheblichen Fräswerkzeugverschleiß und somit zu höheren Fräswerkzeugkosten und einer geringeren Prozesssicherheit führen.

Des Weiteren geht aus der EP 1 034 865 B1 ein Fräsverfahren zur Herstellung einer Turbinenschaufel aus einem Rohteil hervor, bei welchem das Fräswerkzeug entlang einer kontinuierlichen spiralförmigen Führungsbahn von der Aussenkontur des Rohteils zur Kontur des Fertigteils geführt wird und unter stetigem Materialabtrag eine kontinuierliche Gestaltänderung vom. Rohteil zum Fertigteil erreicht wird. Während dem Fräsen kann die Werkzeugsachse des Fräswerkzeuges um einen Sturzwinkel vom Normalenvektor im Berührungspunkt nach vorne in Richtung der Führungsbahn geneigt sowie um einen Neigewinkel vom Normalenvektor seitwärts gekippt werden. Die Eckenbearbeitung stellt dabei keine Eintauchbewegung dar. So erfolgt keine separate Tiefenzustellung mit mehrmaligem Ansetzen. Die kontinuierliche spiralförmige Führungsbahn schließt demzufolge gerade die Unterscheidung zwischen einer Eintauchbewegung und einer darauffolgenden Bearbeitungsbewegung des Fräswerkzeuges aus.

Gleiches gilt für ein Verfahren zum Fräsen tiefer Kanäle, das aus der EP 1 356 886 A1 bekannt ist. Dabei soll ein ausschließlich werkzeug- und werkstückschonendes Gleichlauffräsen ohne Vollschnitt erfolgen. Eine zykloide Fräsermittelpunktsbahn ist durch Überlagern einer exzentrischen Kreisbahn mit einer translatorischen Vorschubbewegung vorgesehen. Zur optimalen Anschmiegung des Fräswerkzeuges an die nicht parallelen Seitenwände kann das Werkzeug so geschwenkt werden, dass es zeitweilig parallel zu den Seitenwandtangenten steht.

Die US-A-3 811 163 beschreibt schließlich eine Taschenbearbeitung, wobei Schaftfräser sowohl stirnseitig als auch mit der Mantelfläche schneiden können. Einer bohrenden Tiefenzustellung folgt eine seitliche Zustellung, die aufgrund der hohen Biegebelastung typischerweise nicht tiefer als 20 % des Werkzeugdurchmessers beträgt. Der Öffnungsschnitt wird seitlich erweitert, bevor die nächste Tiefenzustellung erfolgt, bis eine Gesamtzustellung von 1,5- bis 2-fachen des Werkzeugdurchmessers erreicht ist.

Der vorliegenden Erfindung liegt daher die Aufgabe zugrunde, ein Verfahren zum Eintauchen eines Fräswerkzeuges in ein zu entfernendes Material eines Rohteiles zur Verfügung zu stellen, mit welchem sich die obigen Nachteile verhindern lassen, welches mithin Fräswerkzeuge schonender einzusetzen imstande ist und die Prozesssicherheit steigert bzw. insbesondere eine prozesssichere Bearbeitung für schwer zerspanbare Materialien ermöglicht sowie damit einhergehend zu einer erheblichen Reduzierung von Fertigungskosten führt.

Diese Aufgabe wird auf überraschend einfache Weise durch die Merkmale des Anspruchs 1 gelöst.

Durch die Ausgestaltung des erfindungsgemäßen Verfahrens zur Herstellung eines Fertigteils aus einem Rohteil mittels eines Fräswerkzeuges, wobei das Fräswerkzeug während des Eintauchens in ein Material des Rohteils in Bezug auf einen Eintauchweg abweichend von der Orientierung des Fräswerkzeuges der unmittelbar darauffolgenden Bearbeitung automatisch in Vorschubrichtung und/oder seitlich zur Vorschubrichtung verschwenkt bzw. gekippt bzw. verkippt wird, lassen sich axiale Fräswerkzeugbelastungen aufgrund bohrender Schnittbedingungen während des Eintauchweges des Fräswerkzeuges in das Material des Rohteils vollständig vermeiden, zumindest in erheblicher Weise reduzieren. Damit einhergehend zeichnet sich das erfindungsgemäße Verfahren besonders dadurch aus, als mithin Fräswerkzeuge schonender eingesetzt werden. Zugleich werden mit dem Verfahren nach der Erfindung die Prozesssicherheit insgesamt wesentlich erhöht und insbesondere eine prozesssichere Bearbeitung für schwer zerspanbare Materialien ermöglicht. Schließlich trägt das erfindungsgemäße Verfahren zu einer erheblichen Reduzierung von Fertigungskosten bei.

Weitere besonders vorteilhafte Einzelheiten des erfindungsgemäßen Verfahrens sind in den Ansprüchen 2 bis 15 beschrieben.

Entsprechend den Merkmalen des Anspruchs 2 wird das Fräswerkzeug auf einem Eintauchweg, der rampenförmig ausgebildet ist, geführt.

In diesem Zusammenhang ist erfindungsgemäß vorgesehen, dass das Fräswerkzeug nach Anspruch 3 auf einem Eintauchweg, der in Form einer einfachen Rampe ausgebildet ist, geführt wird.

In alternativer Ausgestaltung dazu kann das Fräswerkzeug nach Anspruch 4 auf einem Eintauchweg, der in Form einer mehrfachen Rampe ausgebildet ist, mit zickzackförmig, mäanderförmig oder dergleichen hin- und herbewegend wechselnder Vorschubrichtung geführt sein.

Weiterhin liegt es im Rahmen der Erfindung, dass das Fräswerkzeug nach Anspruch 5 auf einem Eintauchweg, der helikal, zylinder-, kegel- oder dergleichen -förmig ausgebildet ist, geführt wird.

Vorzugsweise wird das Fräswerkzeug nach Anspruch 6 auf einem Eintauchweg, der als Helix mit wenigstens einem Umlauf ausgebildet ist, geführt.

In vorteilhafter Weise wird das Fräswerkzeug nach Anspruch 7 auf einem Eintauchweg, der als partielle Helix ausgebildet ist, geführt.

Entsprechend den Maßnahmen des Anspruchs 8 wird das Fräswerkzeug auf einem Eintauchweg, der als partielle Helix ausgebildet ist, geführt, wobei eine Tiefenzustellung mäanderförmig in mehreren Zustellungen mit wechselnder Vorschubrichtung vorgenommen wird.

Das Fräswerkzeug wird nach Anspruch 9 auf einem Eintauchweg, der linear und/oder kreisförmig ausgebildet ist, geführt.

Alternativ oder kumulativ wird das Fräswerkzeug entsprechend den Merkmalen des Anspruchs 10 auf einem Eintauchweg, der als Spline oder krümmungsstetige Kurve ausgebildet ist, geführt.

Von besonderem Vorteil sind die Maßnahmen des Anspruchs 11, wonach der Eintauchweg des Fräswerkzeuges durch eine kreisförmige Interpolation bei der Tiefenzustellung bestimmt wird.

Darüber hinaus liegt es im Rahmen der Erfindung, den Eintauchweg des Fräswerkzeuges nach Anspruch 12 durch eine krümmungsstetige Interpolation bei der Tiefenzustellung zu bestimmen.

Zweckmäßigerweise wird der Eintauchweg des Fräswerkzeuges nach Anspruch 13 aus Abschnitten mit linear und/oder kreisförmig und/oder krümmungsstetig interpolierter Tiefenzustellung zusammengesetzt.

Des Weiteren ist es besonders vorteilhaft, dass der Eintauchweg des Fräswerkzeuges nach Anspruch 14 durch eine zum Bearbeitungsweg unterschiedliche Vorschubgeschwindigkeit vorgegeben wird.

Schließlich ist vorzugsweise erfindungsgemäß noch vorgesehen, dass der Kippwinkel des Fräswerkzeuges nach Anspruch 15 größer ist als der Neigungswinkel des rampenförmigen Eintauchweges. Grundsätzlich wird zum Vermeiden bzw. Reduzieren bohrender Schnittbedingungen ein Kippwinkel des Fräswerkzeuges angestrebt, der größer ist als der Neigungswinkel des rampenförmigen Eintauchweges. Um mögliche Kollisionen zu vermeiden, wird das Fräswerkzeug vorzugsweise seitlich zur Bewegungsrichtung gekippt. Lassen sich Kollisionen allerdings auf diese Weise nicht vermeiden, kann auch ein kleinerer Voreilwinkel zum Reduzieren bohrender Schnittbedingungen zweckmäßig bzw. sogar erforderlich sein.

Weitere Merkmale, Vorteile und Einzelheiten der Erfindung ergeben sich aus der nachfolgenden Beschreibung einiger bevorzugten Ausführungsformen der Erfindung sowie anhand der Zeichnungen. Hierbei zeigen:

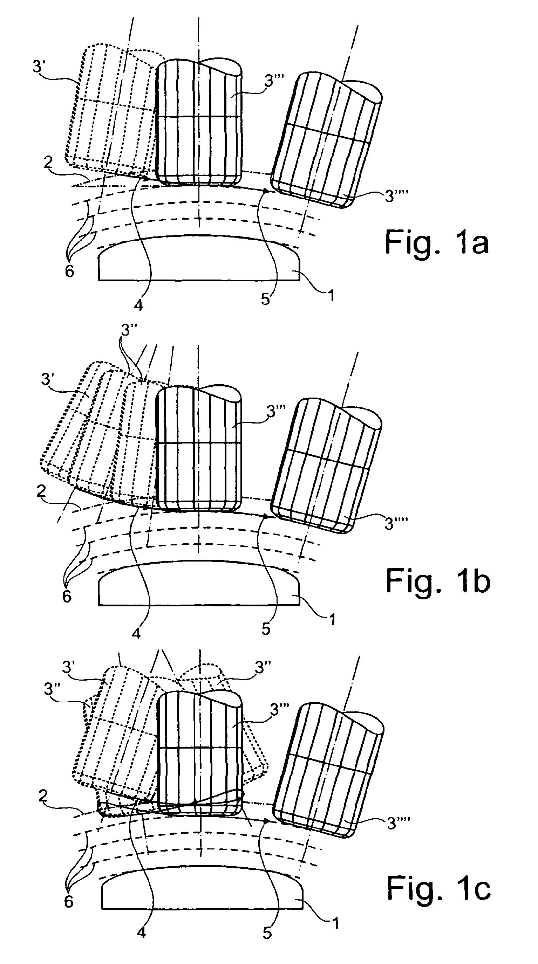

- Fig. 1a: eine schematische Ansicht eines Fräswerkzeuges zur Veranschaulichung eines erfindungsgemäßen Verfahrens zur Herstellung eines Fertigteils aus einem Rohteil mittels des Fräswerkzeuges, wobei das Fräswerkzeug in das Material des Rohteils entsprechend der Fig. 2a rampenförmig eingetaucht wird,
- Fig. 1b: eine schematische Ansicht eines Fräswerkzeuges zur Veranschaulichung des erfindungsgemäßen Verfahrens, wobei das Fräswerkzeug in das Material des Rohteils entsprechend der Fig. 1a rampenförmig mit kreisförmiger Interpolation der Tiefenzustellung eingetaucht wird,
- Fig. 1c.: eine schematische Ansicht eines Fräswerkzeuges zur Veranschaulichung des erfindungsgemäßen Verfahrens, wobei das Fräswerkzeug in das Material des Rohteils entsprechend der Fig. 1b rampenförmig mit kreisförmi- ger Interpolation der Tiefenzustellung in mehreren Zustellungen und wechselnder Vorschubrichtung eingetaucht wird, wobei die einzelnen Tiefenzustellungen mit einer sanften Bewegung zum Umorientierung des Fräswerkzeuges verbunden sind,
- Fig. 2a, 2b und 2c: schematische Ansichten des Fräswerkzeuges zur Veranschaulichung von bekannten Verfahren für 3achsige Bearbeitungen, wobei das Fräswerkzeug auf verschiedenen Weisen in das Material des Rohteils eingetaucht wird,
- Fig. 3a, 3b und 3c: schematische Ansichten des Fräswerkzeuges zur Veranschaulichung von bekannten Verfahren für mehrachsige Bearbeitungen bzw. Bearbeitungen mit veränderlicher Orientierung der Werkzeugachse, wobei das Fräswerkzeug auf verschiedenen Weisen in das Material des Rohteils eingetaucht wird, wobei während des Eintauchens die Orientierung des Fräswerkzeuges unverändert der Orientierung des Fräswerkzeuges an der ersten Position nach Erreichen der vollen Zustelltiefe entspricht, und
- Fig. 4a, 4b und 4c: schematische Ansichten des Fräswerkzeuges zur Veranschaulichung von weiteren bekannten Verfahren für mehrachsige Bearbeitungen bzw. Bearbeitungen mit veränderlicher Orientierung der Werkzeugachse, wobei das Fräswerkzeug auf verschiedenen Weisen in das Material des Rohteils eingetaucht wird und das Fräswerkzeug während des Eintauchens den globalen Regeln zur Werkzeugorientierung folgt.

Bei der nachfolgenden Beschreibung von verschiedenen Ausführungsformen eines erfindungsgemäßen Verfahrens zur Herstellung eines Fertigteils 1 aus einem Rohteil 2 mittels eines Fräswerkzeuges 3 sind einander entsprechende, gleiche Bauteile jeweils mit identischen Bezugsziffern versehen.

Dabei befindet sich das Fräswerkzeug 3' zu Beginn des Eintauchweges, das Fräswerkzeug 3" während des Eintauchweges, das Fräswerkzeug 3"' am Ende des Eintauchweges bzw. am Beginn der nachfolgenden Bearbeitung und das Fräswerkzeug 3'''' während der nachfolgenden Bearbeitung.

Der Eintauchweg des Fräswerkzeuges 3, also der Werkzeugweg während des Eintauchens, ist mit der Bezugsziffer 4 versehen, während der Bearbeitungsweg des Fräswerkzeuges 3, also der Fräswerkzeugweg während der Bearbeitung, mit der Bezugsziffer 5 verdeutlicht ist. Die Bezugsziffer 6 stellt verschiedene Tiefenzustellungen der Bearbeitung dar.

In den Fig. 1a bis 1c ist das erfindungsgemäße Verfahren schematisch dargestellt, bei welchem das Eintauchen des Fräswerkzeuges bzw. Fräsers 3 in das Material bei mehrachsigen Bearbeitungen bzw. Bearbeitungen mit veränderlicher Orientierung der Werkzeugachse gemäß dem Gegenstand der Erfindung am Beispiel einer rampenförmigen Tiefenzustellung erfolgt. Abweichend von globalen Regeln für die Orientierung des Fräswerkzeuges 3 bei der Bearbeitung der jeweilige Schicht folgt die Werkzeugorientierung während des Eintauchens Vorgaben zur Vermeidung von Bohrschnitten - hier als Voreilwinkel bezogen auf die Bahn.

So werden bohrende Schnittbedingungen vermieden, zumindest aber erheblich reduziert.

Bahnverlauf und Werkzeugorientierung werden somit für den Eintauchweg separat hinsichtlich der besonderen Schnittbedingungen während dieses Abschnittes optimiert, um die Nachteile der dem Stand der Technik entsprechenden Verfahren zu vermeiden.

Im einfachsten Fall, wie in Fig. 1a und 1b zu sehen, wird das Fräswerkzeug 3 automatisch entsprechend dem Winkel des rampenförmigen Eintauchweges 4 in Vorschubrichtung gekippt, wobei der Kippwinkel des Fräswerkzeuges 3 größer sein sollte als der Neigungswinkel des rampenförmigen Eintauchweges 4. Um mögliche Kollisionen zu vermeiden, wird das Fräswerkzeug 3 vorzugsweise seitlich zur Bewegungsrichtung gekippt. Mit Erreichen der Bearbeitungstiefe bzw. dem Ende des Eintauchweges 4 wird die Orientierung des Fräswerkzeuges 3 eingestellt, welche mittels der globalen Führungsinformationen für die Bearbeitung vorgegeben ist.

Erfolgt die Tiefenzustellung entsprechend der Fig. 1c in mehreren Schritten mit wechselnder Vorschubrichtung, so ist der Eintauchweg 4 bei jedem Wechsel der Vorschubrichtung durch einen Bereich gekennzeichnet, in dem das Fräswerkzeug 3 hinsichtlich des Voreilwinkels umorientiert wird und wobei keine Tiefenzustellung am Berührpunkt des Fräswerkzeuges erfolgt. Eine Veränderung der Seitenneigung kann hierbei optional ebenso erfolgen.

Bei einer Rampe oder Helix mit linearer Interpolation der Tiefenzustellung ist der Kippwinkel des Fräswerkzeuges 3 in Vorschubrichtung - bezogen auf die Maschinenachsen - während des Eintauchweges 4 konstant.

Stellt der Eintauchweg 4 einen Kreisabschnitt - wie in Figur 1b dargestellt - bzw. eine krümmungsstetige Kurve dar bzw. enthält ein kombinierter Eintauchweg 4 derartige Abschnitte, so ergibt sich der erforderliche Kippwinkel aus der Tangente an den Eintauchweg 4. Der Kippwinkel des Fräswerkzeuges 3 in Vorschubrichtung ist somit - bezogen auf die Maschinenachsen - während des Eintauchweges 4 nicht konstant. Um starke Bewegungen der Maschinenachsen zu vermeiden sind für den Eintauchweg 4 kleine Radien zu vermeiden.

Die Fig. 2a bis 2c zeigen auf schematische Weise verschiedene bekannte Fräsverfahren mit Eintauchmodi für 3achsige Bearbeitungen. Die Orientierung des Fräswerkzeuges 3 bleibt unverändert. Der zurückzulegende Weg ergibt sich aus dem maximal zulässigen Winkels des Fräswerkzeuges 3 und der zu erreichenden Tiefe. Es ist deutlich zu erkennen, dass das Fräswerkzeug 3 während der Tiefenzustellung mit seiner Stirnseite in das Material des Rohteils 2 eintaucht. An- und Abfahrwege werden in der Regel nachträglich an die berechnete Fräswerkzeugbahn einer Bearbeitung "angehängt".

Die Fig. 2a zeigt dabei das rampenförmige Eintauchen in das Material des Rohteils 2 als kontinuierliche Verlängerung der nachfolgenden Bearbeitungsbahn. Ein kurzzeitiger Stillstand des Fräswerkzeuges 3 kann so vermieden werden.

Die Fig. 2b zeigt die Ausführung des rampenförmigen Eintauchens in das Material des Rohteils, wenn für das Eintauchen des Fräswerkzeuges 3 entsprechend der Fig. 2a keine ausreichende Weglänge zur Verfügung steht. Das Eintauchen in die Tiefe erfolgt dann unter häufigeren Bewegungswechseln, vergleichbar einem Zickzack.

Die Fig. 2c zeigt ein helikales Eintauchen des Fräswerkzeuges 3 in das Material des Rohteils 2. Die Zahl der Umläufe wird neben der zu erreichenden Tiefe und dem maximal zulässigen Eintauchwinkel auch von dem Radius der Helix bestimmt.

Die Fig. 3a bis 3c zeigen schematisch ein Eintauchen des Fräsers 3 in das Material des Rohteils 2 bei mehrachsigen Bearbeitungen, d.h. bei Bearbeitungen mit veränderlicher Orientierung der Werkzeugachse, gemäß dem Stand der Technik, wobei die Orientierung des Fräswerkzeuges des ersten Bahnpunktes der zu erreichenden Tiefe für die gesamte Tiefenzustellung unverändert beibehalten wird. Diese Bewegungsführung ist typisch für Bearbeitungen, bei welchen die Werkzeugorientierung durch Normalenvektoren von Flächen definiert ist. Bei derartigen mehrachsigen Bearbeitungen wird dabei oft während des Eintauchweges 4 die Orientierung des Fräswerkzeuges 3 am ersten Bahnpunkt der entsprechenden Bearbeitungstiefe unverändert über dem gesamten Eintauchweg 4 unverändert beibehalten. In den Fig. 3a bis 3c ist zu erkennen, dass sich dabei bohrender Schnittbedingungen ergeben können.

Die Fig. 3a zeigt die Werkzeugorientierung beim rampenförmigen Eintauchen in das Material des Rohteils 2 als kontinuierliche Verlängerung der nachfolgenden Bearbeitungsbahn.

Die Fig. 3b zeigt die Werkzeugorientierung beim rampenförmigen Eintauchen in das Material des Rohteils 2, wenn für das Eintauchen des Fräswerkzeuges 3 gemäß der Fig. 2a keine ausreichende Weglänge zur Verfügung steht.

Die Fig. 3c zeigt die Werkzeugorientierung beim helikalen Eintauchen in das Material.

Die Fig. 4a bis 4c zeigen schematisch ein Eintauchen des Fräsers 3 in das Material des Rohteils 2 bei mehrachsigen Bearbeitungen bzw. Bearbeitungen mit veränderlicher Orientierung der Werkzeugachse gemäß dem Stand der Technik, wobei die Werkzeugorientierung entsprechend der global definierten Regeln kontinuierlich fortgesetzt wird. Diese Bewegungsführung ist typisch für Bearbeitungen, bei welchen die Werkzeugorientierung durch Kurven, Punkte oder allgemeine Regeln der Kollisionsvermeidung definiert ist. Bei solchen mehrachsigen Bearbeitungen wird für die Orientierung des Fräswerkzeuges 3 auch die globale Führungsinformation der nachfolgenden Bearbeitung bzw. Bearbeitungsschicht angewandt, die sich an den Schnittbedingungen während der eigentlichen Bearbeitung und der Vermeidung von Kollisionen orientiert. Wie in den Fig. 4a bis 4c gezeigten Beispielen zu erkennen ist, können sich auch hier während des Eintauchens bohrende Schnittbedingungen ergeben.

Fig. 4a zeigt die Werkzeugorientierung beim rampenförmigen Eintauchen in das Material als kontinuierliche Verlängerung der nachfolgenden Bearbeitungsbahn.

Fig. 4b zeigt die Werkzeugorientierung beim rampenförmigen Eintauchen in das Material, wenn für das Eintauchen des Fräswerkzeuges gemäß der Fig. 2a keine ausreichende Weglänge zur Verfügung steht.

Fig. 4c zeigt die Werkzeugorientierung beim helikalen Eintauchen in das Material.

## Patentansprüche

1. Verfahren zur Herstellung eines Fertigteils (1) aus einem Rohteil (2) mittels eines Fräswerkzeuges (3), **dadurch gekennzeichnet, dass** das Fräswerkzeug (3) während des Eintauchens in ein Material des Rohteils (2) in Bezug auf einen Eintauchweg (4) abweichend von der Orientierung (5) des Fräswerkzeuges (3) der unmittelbar darauffolgenden Bearbeitung automatisch in Vorschubrichtung und/oder seitlich zur Vorschubrichtung verschwenkt wird.

2. Verfahren nach Anspruch 1, **dadurch gekennzeichnet, dass** das Fräswerkzeug (3) auf einem Eintauchweg (4), der rampenförmig ausgebildet ist, geführt wird.

3. Verfahren nach Anspruch 1 oder 2, **dadurch gekennzeichnet, dass** das Fräswerkzeug (3) auf einem Eintauchweg (4), der in Form einer einfachen Rampe ausgebildet ist, geführt wird.

4. Verfahren nach Anspruch 1 oder 2, **dadurch gekennzeichnet, dass** das Fräswerkzeug (3) auf einem Eintauchweg (4), der in Form einer mehrfachen Rampe ausgebildet ist, mit zickzackförmig, mäanderförmig oder dergleichen hin- und herbewegend wechselnder Vorschubrichtung geführt wird.

5. Verfahren nach einem der Ansprüche 1 bis 4, **dadurch gekennzeichnet, dass** das Fräswerkzeug (3) auf einem Eintauchweg (4), der helikal, zylinder-, kegel- oder dergleichen -förmig ausgebildet ist, geführt wird.

6. Verfahren nach einem der Ansprüche 1 bis 5, **dadurch gekennzeichnet, dass** das Fräswerkzeug (3) auf einem Eintauchweg (4), der als Helix mit wenigstens einem Umlauf ausgebildet ist, geführt wird.

7. Verfahren nach einem der Ansprüche 1 bis 6, **dadurch gekennzeichnet, dass** das Fräswerkzeug (3) auf einem Eintauchweg (4), der als partielle Helix ausgebildet ist, geführt wird.

8. Verfahren nach einem der Ansprüche 1 bis 7, **dadurch gekennzeichnet, dass** das Fräswerkzeug (3) auf einem Eintauchweg (4), der als partielle Helix ausgebildet ist, geführt wird, wobei eine Tiefenzustellung mäanderförmig in mehreren Zustellungen mit wechselnder Vorschubrichtung vorgenommen wird.

9. Verfahren nach einem der Ansprüche 1 bis 8, **dadurch gekennzeichnet, dass** das Fräswerkzeug (3) auf einem Eintauchweg (4), der linear und/oder kreisförmig ausgebildet ist, geführt wird.

10. Verfahren nach einem der Ansprüche 1 bis 9, **dadurch gekennzeichnet, dass** das Fräswerkzeug (3) auf einem Eintauchweg (4), der als Spline oder krümmungsstetige Kurve ausgebildet ist, geführt wird.

11. Verfahren nach einem der Ansprüche 1 bis 10, **dadurch gekennzeichnet, dass** der Eintauchweg (4) des Fräswerkzeuges (3) durch eine kreisförmige Interpolation bei der Tiefenzustellung bestimmt wird.

12. Verfahren nach einem der Ansprüche 1 bis 11, **dadurch gekennzeichnet, dass** der Eintauchweg (4) des Fräswerkzeuges (3) durch eine krümmungsstetige Interpolation bei der Tiefenzustellung bestimmt wird.

13. Verfahren nach einem der Ansprüche 1 bis 12, **dadurch gekennzeichnet, dass** der Eintauchweg (4) des Fräswerkzeuges (3) aus Abschnitten mit linear und/oder kreisförmig und/oder krümmungsstetig interpolierter Tiefenzustellung zusammengesetzt wird.

14. Verfahren nach einem der Ansprüche 1 bis 13, **dadurch gekennzeichnet, dass** der Eintauchweg (4) des Fräswerkzeuges (3) durch eine zum Bearbeitungsweg (5) unterschiedliche Vorschubgeschwindigkeit vorgegeben wird.

15. Verfahren nach einem der Ansprüche 1 bis 14, **dadurch gekennzeichnet, dass** der Kippwinkel des Fräswerkzeuges (3) größer ist als der Neigungswinkel des rampenförmigen Eintauchweges (4).

## Claims

1. Method for producing a prefabricated part (1) from an unmachined part (2) by means of a milling tool (3), **characterized in that** the milling tool (3) during the immersion into a material of the unmachined part (2) is being automatically swivelled in advance direction and/or sideways to the advance direction in relation to an immersion path (4) differing from the orientation (5) of the milling tool (3) of the immediately subsequent processing step.

2. Method according to claim 1, **characterized in that** the milling tool (3) is being guided along an immersion path (4) that is embodied in the form of a ramp.

3. Method according to claim 1 or 2, **characterized in that** the milling tool (3) is being guided along an immersion path (4) that is embodied in the form of a single ramp.

4. Method according to claim 1 or 2, **characterized in that** the milling tool (3) is being guided along an immersion path (4) that is embodied in the form of a multiple ramp, routed with a zigzag-, meander-shaped or similarly shaped alternating advance direction moving back and forth.

5. Method according to any of the claims 1 to 4, **characterized in that** the milling tool (3) is being guided along an immersion path (4) that is embodied in the form of a helix, cylinder, cone or similar shape.

6. Method according to any of the claims 1 to 5, **characterized in that** the milling tool (3) is being guided along an immersion path (4) that is embodied in the form of a helix with at least one cycle.

7. Method according to any of the claims 1 to 6, **characterized in that** the milling tool (3) is being guided along an immersion path (4) that is embodied in the form of a partial helix.

8. Method according to any of the claims 1 to 7, **characterized in that** the milling tool (3) is being guided along an immersion path (4) that is embodied in the form of a partial helix, while a depth advancement is being made in meandering loops in several advancements with changing advance directions.

9. Method according to any of the claims 1 to 8, **characterized in that** the milling tool (3) is being guided along an immersion path (4) that is embodied in linear and/or circular form.

10. Method according to any of the claims 1 to 9, **characterized in that** the milling tool (3) is being guided along an immersion path (4) that is embodied in the form of a spline or curve with constant curvature.

11. Method according to any of the claims 1 to 10, **characterized in that** the immersion path (4) of the milling tool (3) is defined by a circular interpolation for the depth advancement.

12. Method according to any of the claims 1 to 11, **characterized in that** the immersion path (4) of the milling tool (3) is defined by a constant-curvature interpolation for the depth advancement.

13. Method according to any of the claims 1 to 12, **characterized in that** the immersion path (4) of the milling tool (3) is composed of sections of linear and/or circular and/or constant-curvature interpolated depth advancement.

14. Method according to any of the claims 1 to 13, **characterized in that** the immersion path (4) of the milling tool (3) is defined by a feed speed differing from the processing path (5).

15. Method according to any of the claims 1 to 14, **characterized in that** the tilt angle of the milling tool (3) is higher than the inclination angle of the ramp-shaped immersion path (4).

## Revendications

1. Procédé de fabrication d'une pièce finie (1) à partir d'une pièce brute (2) au moyen d'un outil de fraisage (3), **caractérisé en ce que**, pendant la plongée dans un matériau de la pièce brute (2), l'outil de fraisage (3) est basculé automatiquement en direction d'avance et/ou latéralement par rapport à la direction d'avance par référence à une course de plongée (4) de manière différente à l'orientation (5) de l'outil de fraisage (3) de l'usinage immédiatement successif.

2. Procédé selon la revendication 1, **caractérisé en ce que** l'outil de fraisage (3) est guidé sur un trajet de plongée (4) qui est réalisé en forme de rampe.

3. Procédé selon la revendication 1 ou 2, **caractérisé en ce que** l'outil de fraisage (3) est guidé sur un trajet de plongée (4) qui est réalisé sous la forme d'une rampe simple.

4. Procédé selon la revendication 1 ou 2, **caractérisé en ce que** l'outil de fraisage (3) est guidé sur un trajet de plongée (4) qui est réalisé sous la forme d'une rampe multiple avec une direction d'avance qui alterne en va-et-vient en formant des zigzags, des méandres, ou similaires.

5. Procédé selon l'une des revendications 1 à 4, **caractérisé en ce que** l'outil de fraisage (3) est guidé sur un trajet de plongée (4) qui est réalisé sous forme hélicoïdale, cylindrique, conique, ou similaire.

6. Procédé selon l'une des revendications 1 à 5, **caractérisé en ce que** l'outil de fraisage (3) est guidé sur un trajet de plongée (4) qui est réalisé sous forme d'hélice avec au moins une spire.

7. Procédé selon l'une des revendications 1 à 6, **caractérisé en ce que** l'outil de fraisage (3) est guidé sur un trajet de plongée (4) qui est réalisé sous forme d'hélice partielle.

8. Procédé selon l'une des revendications 1 à 7, **caractérisé en ce que** l'outil de fraisage (3) est guidé sur un trajet de plongée (4) qui est réalisé sous forme d'hélice partielle, de sorte que l'on procède à une approche en profondeur en forme de méandres avec plusieurs approches avec direction d'avance alternée.

9. Procédé selon l'une des revendications 1 à 8, **caractérisé en ce que** l'outil de fraisage (3) est guidé sur un trajet de plongée (4) qui est réalisé de manière linéaire et/ou sous forme circulaire.

10. Procédé selon l'une des revendications 1 à 9, **caractérisé en ce que** l'outil de fraisage (3) est guidé sur un trajet de plongée (4) qui est réalisé sous forme de cannelure ou de came à courbure constante.

11. Procédé selon l'une des revendications 1 à 10, **caractérisé en ce que** le trajet de plongée (4) de l'outil de fraisage (3) est déterminé par une interpolation à forme circulaire lors de l'approche en profondeur.

12. Procédé selon l'une des revendications 1 à 11, **caractérisé en ce que** le trajet de plongée (4) de l'outil de fraisage (3) est déterminé par une interpolation à courbure constante lors de l'approche en profondeur.

13. Procédé selon l'une des revendications 1 à 12, **caractérisé en ce que** le trajet de plongée (4) de l'outil de fraisage (3) est composé de tronçons avec approche en profondeur interpolée de manière linéaire et/ou à forme circulaire et/ou à courbure constante.

14. Procédé selon l'une des revendications 1 à 13, **caractérisé en ce que** le trajet de plongée (4) de l'outil de fraisage (3) est imposé par une vitesse d'avance différente par rapport au trajet d'usinage (5).

15. Procédé selon l'une des revendications 1 à 14, **caractérisé en ce que** l'angle de basculement de l'outil de fraisage (3) est supérieur à l'angle d'inclinaison du trajet de plongée en forme de rampe (4).
